# FASCICULE DE BREVET EUROPEEN

(11) **EP 1 432 866 B1**
(45) Date de publication et mention de la délivrance du brevet: **03.11.2010**
(21) Numéro de dépôt: 02748960.8
(22) Date de dépôt: 19.06.2002
(51) Int. Cl.: D06M 16/00

(54) **PROCEDE DE TRAITEMENT ANTI-ACARIEN ET ANTI-MICROBIEN DE MATERIAUX TEXTILES**
VERFAHREN ZUR BEHANDLUNG VON TEXTILMATERIALIEN MIT AKARIZIDEN UND MIKROBIZIDEN MITTTELN
METHOD FOR ACARICIDAL AND MICROBICIDAL TREATMENT OF TEXTILE MATERIALS

(30) Priorité: 22.06.2001 FR 0108282
(43) Date de publication de la demande: 30.06.2004
(73) Titulaire: YEREB LAB Limited, 1096 Nicosia (CY)
(72) Inventeur: CHETBOUN, Nathalie, F-13009 Marseille (FR)
(74) Mandataire: Domange, Maxime
(86) Numéro de dépôt international: PCT/FR2002/002108
(87) Numéro de publication internationale: WO 2003/002807

(56) Documents cités:
- EP-A- 0 494 067
- EP-A- 0 863 248
- WO-A-03/071871
- DE-A- 19 532 447
- GB-A- 1 401 143
- US-A- 6 060 075
- DATABASE WPI Section Ch, Week 199038 Derwent Publications Ltd., London, GB; Class A97, AN 1990-285998 XP002247033 & JP 02 200602 A (KURARAY CO LTD), 8 août 1990 (1990-08-08)
- DATABASE WPI Section Ch, Week 199222 Derwent Publications Ltd., London, GB; Class C07, AN 1992-178063 XP002247034 & JP 04 100980 A (ASAHI CHEM IND CO LTD), 2 avril 1992 (1992-04-02)

## Description

La présente invention concerne un procédé de traitement anti-acarien et anti-microbien de matériaux textiles, une composition de microcapsules d'huile de Neem utile spécifiquement pour ce traitement et un matériau textile bioactif obtenu.

Plus particulièrement, la présente invention concerne le domaine industriel et commercial des traitements des tissus et produits assimilés et s'applique en particulier aux matériaux textiles réalisés à partir de fibres naturelles telles que coton, plumes, duvets ou de fibres synthétiques telles que polyester, nylon, acrylique ou autre, ou des fibres mixtes telles que polyester-coton.

Les acariens sont de petits arachnides bien connus pour trouver un terrain favorable dans les habitations et proliférer dans les matériaux textiles constituant la literie, les tapis et les moquettes par exemple, causant de sérieux problèmes à l'homme, notamment des problèmes respiratoires se caractérisant par des allergies ou des asthmes, dont les remèdes doivent présenter une continuité dans le temps.

Les composés anti-acariens utilisés à ce jour le plus généralement sont des composés de type périthrénoïde.

Ces composés présentent une certaine toxicité et ont des effets écologiques néfastes car ils ne sont pas biodégradables.

Un premier but de la présente invention est de fournir un procédé de traitement anti-acarien des matériaux textiles qui ne présente pas de toxicité et qui soit acceptable sur le plan écologique.

Le procédé selon la présente invention a aussi pour objectif de proposer de façon originale un traitement des matériaux textiles eux-mêmes, en leur conférant des propriétés bio-actives, acaricides / acarifuges et anti-microbiennes qui soient efficaces dans le temps, notamment sur une période assez longue, et qui soient résistantes à plusieurs lavages sans perdre leur efficacité, notamment avec des lavages et séchages en machine.

Il existe un produit connu notamment dans EP 436 257, comme insecticide dans le domaine du bois, de l'agriculture et de l'hygiène vétérinaire notamment pour lutter contre les insectes nuisibles tels que moustiques, tiques, mouches et poux, ainsi que certaines espèces de bactéries. Il s'agit d'une huile naturelle et végétale extraite des pépins de noix du Neem. Le Neem (azadirachta indica) est un arbre appartenant à la famille de l'acajou et pouvant atteindre environ 15 mètres de haut, qui est répandu dans les zones tropicales et subtropicales, plus particulièrement en Inde, Afrique, Indonésie et Amérique du Sud.

L'huile de Neem peut être extraite par pression des pépins à froid de Neem ou par extraction par des solvants, comme décrit dans les brevets EP 494 067 et WO 97/25867.

L'huile de Neem est un produit qui est biodégradable et ni toxique ni allergène.

L'huile de Neem n'a jamais été proposée pour des traitement anti-acarien de matériaux textiles, car il présente un grand nombre d'inconvénients qui sont entre autres :
1/ une odeur d'ail répulsive,
2/ une oxydation rapide lui donnant une couleur beige-brunâtre,
3/ une dégradation des composés actifs par les UV et à température supérieure à 65°C, et
4/ une dégradation des composés actifs au contact de l'eau.

Ces inconvénients constituent des obstacles qui ont dissuadé l'homme de l'art d'utiliser l'huile de Neem dans les tissus destinés à la maison.

En particulier, les caractéristiques physico-chimiques de l'huile de Neem sont incompatibles avec une résistance au lavage et au séchage en machine, propriété incontournable dans le domaine des tissus et de la literie par exemple en application en milieu industriel.

La microencapsulation de substances liquides ou solides qui permet d'emprisonner lesdites substances dans des microcapsules à parois polymériques, est connue. Protégés par leurs microcapsules, les agents actifs ne sont libérés que lors de l'éclatement de celles-ci, lorsqu'elles sont mises en contact dans certains bilieux ou certaines conditions qui génèrent leur délitement ou éclatement.

Les traitements des matériaux textiles avec les différents apprêts leur conférant différentes propriétés telles que les propriétés anti-feu, anti-tâches, ou l'application d'apprêt bouche-pore ou même le calandrage, impliquent à un niveau industriel, des traitements de foulardage suivis d'une étape de séchage à des températures supérieures à 120°C pour obtenir un séchage rapide.

Ces températures de séchage sont incompatibles avec le maintien des propriétés actives de l'huile de Neem.

L'inventeur a découvert qu'il était possible de réaliser un traitement anti-acarien et anti-microbien de matériaux textiles, qui réponde aux objectifs de la présente invention et surmonte les différents inconvénients de l'huile de Neem énoncés précédemment, en traitant lesdits matériaux textiles avec de l'huile de Neem sous forme micro-encapsulée, c'est-à-dire sous forme de micro-gouttelettes d'huile de Neem enveloppées dans une paroi polymère.

Ainsi micro-encapsulée, l'huile de Neem confère auxdits matériaux textiles un pouvoir anti-acarien et anti-microbien, la libération des substances actives de l'huile de Nîmes se faisant par rupture des microcapsules consécutive suite à un processus mécanique de simple frottement sur ledit matériau textile dans lequel elles sont incorporées.

Lesdites microcapsules servent de véhicule pour fixer l'huile de Neem sur le matériau textile, en améliorer la bio-disponibilité de ses principes actifs, masquer les odeurs désagréables de certains de ses composés, et augmenter la durée de vie desdites substances.

Les molécules actives, par des systèmes enzymatiques, agissent au coeur des fibres contre les nuisibles acariens, en bloquant leur croissance et leur reproduction.

L'inventeur a découvert que l'on pouvait réaliser des microcapsules d'huile de Neem permettant de préserver les propriétés des substances actives de l'huile de Neem au cours du temps et ce même après des traitements de lavage et séchage à température élevée d'une part, et permettant d'autre part une tenue des microcapsules dans le temps, ainsi qu'un maintien des caractéristiques anti-acariennes et anti-microbiennes dudit matériau textile traité avec lesdites microcapsules, même après plusieurs lavages.

La microencapsulation permet donc de résoudre les problèmes d'application sur les matériaux textiles et de libération des substances actives de manière efficace et durable vis-à-vis des matériaux textiles qui sont le siège de nombreux anti-acarien.

En particulier dans les microcapsules, la couleur et l'odeur de l'huile de Neem sont annihilées, et ceci d'autant plus que l'huile de neem peut être mélangée avec d'autres agents, permettant d'obtenir notamment une odeur déterminée.

La présente invention fournit donc un procédé de traitement anti-acarien et anti-microbien d'un matériau textile selon lequel on fixe sur un matériau textile des microcapsules contenant de l'huile de Neem, telle que définie ci-après.

Ces microcapsules représentent un bon compromis entre résistance au lavage, bon accrochage aux matériaux textiles, aptitude à l'éclatement ou la rupture par simple frottement, et enfin efficacité du traitement,

Lesdites microcapsules sont constituées à partir d'un polymère choisi parmi les résines aminoplastes, à savoir des résines résultant de la polycondensation d'un aldéhyde avec une amine ou un amide et plus particulièrement un polymère de type urée-formol.

Lesdites microcapsules sont revêtues d'une pellicule de liants polymères favorisant la fixation desdites microcapsules dans ledit matériau textile et augmentant la résistance à la dégradation desdites microcapsules et molécules actives contenues dans l'huile de Neem, et de préférence encore un dit liant polymère leur conférant des propriétés adoucissantes.

Selon l'invention, lesdits liants sont choisis parmi les liants polyuréthane et polysiloxane.

Le liant de type polyuréthane favorise l'accrochage des microcapsules aux tissus et augmente la résistance au lavage en machine et le liant de type polysiloxane contribue en outre à augmenter la résistance à la dégradation à température élevée, cet effet protecteur étant doublé d'un effet adoucissant.

L'utilisation d'un liant silicone à base de polysiloxane confère en effet des propriétés d'adoucissant car l'ajout de microcapsules dans le tissu lui confère autrement un caractère rêche.

De façon avantageuse, pour obtenir un traitement efficace sur la durée, on fixe une quantité suffisante de microcapsules sur ledit matériau textile, de manière à obtenir une concentration pondérale de 0,1 à 3 % d'huile de Neem dans ledit matériau textile.

Parmi les 200 composés actifs de l'huile de Neem, l'Azadirachtine A, le Nimbin et le Salanim sont selon l'invention les principaux composés à action anti-acarienne, qui agissent contre le développement et la reproduction des acariens.

De préférence, on met en oeuvre une huile de Neem reformulée de façon spécifique pour obtenir une concentration enrichie en molécules actives, manière à contenir les proportions pondérales suivantes :
- 1 à 30 % de Nimbin, de préférence 1 à 25 %,
- 1 à 30 % de Salanim, de préférence 2 à 30 %,
- et 0,15 à 20 % d'Azadirachtine A, de préférence 1 à 20 %.

De façon plus particulièrement avantageuse dans le procédé selon l'invention, on traite ledit matériau textile par trempage ou pulvérisation avec une composition de dites microcapsules d'huile de Neem.

De nombreux moyens de microencapsulation sont connus de l'homme de l'art.

Toutefois compte-tenu des risques de dégradation des substances actives de l'huile de Neem, on met en oeuvre un procédé de microencapsulation n'impliquant pas des températures supérieures à 65°C. Plus particulièrement, on réalise une microencapsulation par polymérisation in situ desdits polymères constitutifs de la paroi dans une formulation d'huile de Neem, cette polymérisation in situ par polycondensation se faisant à une température inférieure à 65°C.

Cette méthode par polymérisation in situ est particulièrement avantageuse car elle implique des liaisons fortes entre les molécules de polymères constituant la paroi, ce qui permet de conserver durablement les propriétés des substances anti-acariennes, même après lavage en machine, et permet de libérer lesdites substances par rupture de la paroi par frottement.

Dans un mode préféré de réalisation, dans le procédé selon l'invention on réalise un trempage initial dudit matériau textile avec une dite composition de microcapsules d'huile de Neem, suivi après usage dudit matériau textile ainsi traité d'une pulvérisation ou d'un nouveau trempage avec une dite composition de microcapsules d'huile de Neem, de préférence au moins tous les cinq lavages dudit matériau textile.

Ladite composition de microcapsules d'huile de Neem comprend une dispersion de microcapsules en mélange avec des dispersions de liants polymères, lesdits liants étant choisis pour favoriser l'accrochage desdites microcapsules dans ledit matériau textile, et augmenter la résistance à la dégradation desdites microcapsules et desdites molécules actives contenues dans l'huile de Neem, à température élevée, de préférence à température supérieure à 65°C, de préférence encore à température supérieure à 150°C.

Ce type de traitement par trempage implique des procédés de séchage industriel à des températures de l'ordre de 150°C, qui, selon la présente invention, n'entraînent pas la dénaturation des substances actives de l'huile de Neem, ni des microcapsules.

Le procédé selon l'invention consiste donc à imprégner le matériau textile à traiter d'un apprêt s'appliquant soit par pulvérisation, soit par trempage dans un bain et ce de manière à incorporer dans ledit tissu une concentration pondérale d'huile de Neem de 0,1 % à 3 %.

Plus particulièrement, on traite ledit matériau textile par trempage dans une composition aqueuse de microcapsules d'huile de Neem, contenant les concentrations pondérales suivantes :
- au moins 0,5% de préférence au moins 3 % de dites microcapsules d'huile de Neem,
- au moins 1,5% de préférence au moins 10 % de liants polyuréthane,
- au moins 0,3% de préférence - au moins 2 % de liant polysiloxane.

Plus particulièrement encore, ladite composition de microcapsules d'huile de Neem, utile pour un procédé de traitement anti-acarien et anti-microbien de matériaux textiles contient une quantité efficace de microcapsules d'huile de Neem, telles que définies précédemment, en mélange avec des liants polymères tels que définis précédemment.

L'utilisation de ces liants polymères confère une bonne résistance au lavage dudit traitement, c'est-à-dire un bon accrochage des microcapsules dans le tissu, notamment jusqu'à cinq lavages consécutifs et une bonne résistance des microcapsules qui en elles-mêmes peuvent atteindre une durée de vie de trois ans et résister à la dégradation dans le temps, ainsi que protéger de la dénaturation les substances actives quelles contiennent, jusqu'à des températures d'au moins 150°C.

La présente invention a également pour objet un matériau textile bio-actif obtenu par le procédé de traitement selon l'invention et, plus particulièrement, un matériau textile bio-actif qui comporte des microcapsules d'huile de Neem, de préférence avec une teneur pondérale d'huile de Neem d'au moins 0,1 %, de préférence encore d'au moins 0,3 %, et de préférence lesdites microcapsules étant revêtues d'une pellicule de liants polymères favorisant la fixation desdites microcapsules dans ledit matériau textile et augmentant la résistance à la dégradation desdites microcapsules et molécules actives contenues dans l'huile de Neem, et de préférence encore undit liant polymère leur conférant des propriétés adoucissantes.

Un matériau textile bio-actif selon l'invention comprend des microcapsules d'huile de Neem, réalisées dans un polymère aminoplaste, et comprenant un revêtement d'au moins un liant polymère comprenant au moins du polyuréthane et/ou du polysiloxane.

Des expérimentations effectuées en laboratoire sur les acariens de la poussière, les plus résistant et virulent en matière d'allergie à savoir Dermaphagoïde pteronissimus, ont montré au bout de trois semaines (un cycle de reproduction) 90 % de mortalité, et 100 % de mortalité au bout de quatre semaines.

Il a été en outre constaté que les textiles traités sont doués d'une capacité de transfert des propriétés acaricides / acarifuges par diffusion des principes actifs libérés sur des matériaux textiles non traités en contact avec un textile traité.

Sur le plan toxicologique, des tests réalisés ont montré, que sur un point toxicologique, cet apprêt est non toxique et inoffensif pour les mammifères, les poissons, les oiseaux et les abeilles. De plus, il est hypoallergénique même après une longue période de contact avec la peau.

Il est possible de coupler, dans les microcapsules, l'huile de Neem avec une autre huile naturelle et végétale aux propriétés physico-chimiques proches de façon à conférer aux matériaux bioactifs des propriétés complémentaires, par exemple l'huile de l'herbe de la Saint-Jean peut être couplée à l'huile de Neem avec un rapport de 3 %. De ce fait, on obtient un matériau qui est aussi bactéricide / bactérifuge.

On peut également ajouter dans les microcapsules des essences parfumées ou désodorantes, choisies en fonction de l'utilisation du produit à traiter.

Les matériaux textiles traités peuvent être utilisés dans des domaines comme la literie (fabrication de couette, duvet, oreiller, draps, taies...), certains textiles comme les rideaux ou les tapis. Ils peuvent aussi être utilisés dans la fabrication d'unités de rangement telles que des housses, emballages pour vêtements, couettes, couvertures, etc...

L'agencement et la combinaison des divers éléments constitutifs donne à l'objet de l'invention un maximum d'effets utiles qui n'avaient pas été, à ce jour, obtenus par des procédés similaires.

D'autres caractéristiques et avantages de la présente invention apparaîtront à la lumière des exemples qui suivent.

### Exemple 1 : Préparation d'une composition de microcapsules d'huile de Neem.

On a utilisé une huile de Neem dénommée « Plasma Neem Oil » de la Société Plasma Power (Inde), ladite huile provenant d'Inde et étant obtenue par extraction de façon traditionnelle à partir de pépins. Cette huile présente les composants actifs suivants aux proportions pondérales suivantes :
- Nimbin : 1 %
- Salanim : 2 %
- Azadirachtine A : 0,15 %

Des microcapsules ont également été réalisées avec de l'huile de Neem fournie par la Société FLAVEX (Allemagne), obtenue par extraction par solvant organique.

On a réalisé une microencapsulation par la méthode de polymérisation in situ par polycondensation connue de l'homme de l'Art.

Le polymère utilisé pour réaliser les microcapsules était une résine urée-formol.

On a obtenu des particules de taille de 1 à 5 microns et plus précisément la majorité des microcapsules était de l'ordre de 2 microns.

A l'issue du procédé d'encapsulation, on obtient une dispersion de microcapsules renfermant 30 % d'huile de Neem.

A des fins d'amélioration de la fixation des microcapsules dans les tissus, on réalise un traitement en milieu basique à Ph 8 - 9 en mélangeant la dispersion de couleur blanche de microcapsules obtenues à l'issue du procédé de microencapsulation avec une dispersion aqueuse d'un liant polyuréthane (référence ROTTA-COATING 96-730 de la société ROTTA (Allemagne). Le liant a tendance à former une pellicule autour des microcapsules.

Le ratio pondéral (dispersion de microcapsules / dispersion de liant polyuréthane) mis en oeuvre était de 15 / 50.

On a ensuite ajouté à cette dispersion de microcapsules dans le liant polyuréthane, une micro-émulsion de silicone, à base de polymères polysiloxane légèrement cationique de référence ROMA-SILIKON de la Société ROTTA, qui contribue également à créer une pellicule protectrice autour des microcapsules.

On obtient ainsi une dispersion aqueuse blanche légèrement visqueuse.

### Exemple 2 : Traitement anti-acarien de tissus.

Plusieurs types de tissus ont été traités parmi les tissus généralement utilisés dans l'industrie de la literie, à savoir les tissus 100 % coton de grammage de 100 à 130 grammes / m² ou des tissus mixtes, polyester / coton de 100 grammes / m² sous forme d'écru (tissu brut) préalablement lavés, désencollés ou apprêtés avec des apprêts anti-feu, anti-tâches, tels que téflon ou des apprêts bouche-pores ou même des tissus calandrés.

On a réalisé un traitement par trempage de microcapsules obtenues selon l'exemple 1, comprenant pour 1 litre de bain :
- 30 grammes de microcapsules,
- 100 grammes de liant polyuréthane,
- 20 grammes de silicone.

Etant donné les tissus utilisés, le taux d'absorption était de 70 %, à savoir 70 grammes de la composition aqueuse absorbée pour 100 grammes de tissu sec initial.

La composition aqueuse de trempage utilisée a permis d'obtenir une concentration pondérale de 2 grammes de capsules pour 100 grammes de tissu, soit une concentration en huile de Neem déposée sur le tissu de 0,6 % (0,6 grammes pour 100 grammes de tissu).

Les tissus ont été séchés à 150°C pendant 60 secondes.

Les microcapsules résistent à une pression de 3 bars sur les rames de traitement.

Bien évidemment on adapte la composition du bain et la concentration des différents constituants du bain en fonction du taux d'absorption des tissus, compte-tenu des concentrations pondérales en huile de Neem à déposer sur le tissu.

Pour le traitement des tissus calandrés pour éviter la perte de calandrage on pratique un traitement par pulvérisation plutôt que par trempage. On pulvérise 10 grammes de formulation d'une composition aqueuse de la même composition que le bain de trempage décrit ci dessus, à raison de 10 grammes de formulation pour 100 grammes de tissus pour obtenir une teneur pondérale de 0,6% d'huile de Neem sur le matériau textile après séchage à 150°C pendant 30 secondes.

### Exemple 3: Mesure de l'efficacité des traitements destinés à lutter contre les acariens de la poussière.

### 1/ Principe :

On a évalué l'impact du traitement de textiles obtenu selon le mode opératoire de l'exemple 2 mais avec une teneur pondérale de seulement 0,3% d'huile de Neem sur le tissu, sur l'évolution d'une population d'acariens de la poussière (Dermatophagoïdes Pteronyssinus) en comparaison avec une population non soumise au produit.

Cette évaluation est effectuée par dépôt d'acariens sur des supports imprégnés ou non des principes actifs.

### 2/ Elevage d'origine des acariens :

Les acariens utilisés (Dermatophagoïdes pteronyssinus) proviennent d'une souche de laboratoire élevée sur un substrat composé d'un mélange 50 / 50 (masse / masse) de germes de blé et de levure de bière en paillettes calibrées par tamisage à savoir des fragments de taille inférieure à 1 mm. La température est comprise entre 23 et 25°C et l'humidité relative maintenue à 75 % par la mise en présence d'une solution saturée d'ammoniaque ([NH4)₂SO4]) ; la souche est conservée à l'obscurité. La souche est fournie par le Laboratoire des insectes et Acariens des Denrées de L'Institut National de Recherches Agronomiques de Bordeaux (I.N.R.A.).

### 3/ Méthode expérimentale :

L'unité expérimentale est constituée par une enceinte de 5 cm de diamètre étanche aux acariens mais autorisant une aération par l'intermédiaire d'un papier filtre et dans laquelle se trouve :
- 0,05 g de substrat nutritif / poussière destiné à assurer la survie alimentaire des acariens,
- une parcelle de PVC tapissant le sol de cette arène revêtue d'un tissu traité,
- 100 à 200 acariens déposés sur le tissus.

Les acariens destinés aux essais ont été préalablement triés afin de récupérer les plus actifs.

Quatre répétitions sont réalisées par facteur expérimental, y compris pour les lots TEMOIN constitués du même dispositif mais avec le support sans traitement.

Les unités expérimentales sont isolées par facteur dans des bacs en polypropylène avec maintien d'humidité relative et mises en conditions optimales de développement identique aux conditions d'élevage mentionnées ci-dessus au paragraphe 2.

### 4/ Contrôles et résultats :

La mortalité est déterminée par comptage sous loupe binoculaire avec compteur à main, grâce à la méthode mise au point et validée par l'I.N.R.A. de Bordeaux.

La mortalité est contrôlée 15 jours, 4 semaines et 6 semaines après dépôt des acariens sur les supports en coton traités ou témoins de coton standard non traité.

Les mesures seront réalisées par le même expérimentateur et les critères de mortalité sont les suivants :
- sont classés comme morts, les acariens incapables de se déplacer,
- sont classés comme vivants, les acariens capables de se déplacer.

On procède à un frottement du support textile à l'aide d'une spatule une fois par semaine, pendant 30 secondes, dans des conditions identiques.

Les résultats sont rapportés dans le tableau 1 ci-après.
- Les comptages donnent les % de mortalité.
- Dans les conditions de ces essais, avec les échantillons, acariens et méthodologie utilisée : les mortalités obtenues sur les lots non traités sont suffisamment basses pour valider l'essai.

L'échantillon a parfaitement contrôlé la population d'acariens sur une période de deux cycles de développement (6 semaines).

**TABLEAU 1**

| | MORTALITES | | | | REDUCTIONS DE POPULATION | | | |
|---|---|---|---|---|---|---|---|---|
| | Après 15 jours | | | | Après 4 semaines | | Après 6 semaines | |
| Textile traité | répétition | M | V | % M | V | %réduction | V | %réduction |
| | 1 | 76 | 32 | 70,4 | 0 | 100 | 0 | 100 |
| | 2 | 80 | 28 | 74,1 | 0 | 100 | 0 | 100 |
| | 3 | 61 | 36 | 62,9 | 0 | 100 | 0 | 100 |
| | 4 | 89 | 20 | 81,7 | 0 | 100 | 0 | 100 |
| | Moy | | 29 | 72,2 | 0 | 100 | 0 | 100 |
| | Ecart-type | | | 1,9 | | | | 0 |
| Témoin | 1 | 8 | 105 | 7,1 | 469 | - | 1320 | - |
| | 2 | 5 | 96 | 5,0 | 481 | - | 1151 | - |
| | 3 | 7 | 115 | 5,7 | 379 | - | 1274 | - |
| | 4 | 5 | 85 | 5,6 | 406 | - | 1056 | - |
| | Moy | | 100,25 | 5,8 | 433,8 | - | 1200,3 | - |
| | Ecart-type | | | 1,1 | 49,1 | - | 119,7 | - |

| | | | | | | | | |
|---|---|---|---|---|---|---|---|---|
| M = Morts V = Vivants % M = % Mortalité | | | | | | | | |

### Exemple 4: Résistance des micro capsules et maintien de l'activité après lavage

On a réalisé 5 lavages successifs en machine sur les textiles bioactifs et on a contrôlé la résistance des microcapsules et la persistance de l'efficacité anti-acarien. La résistance des microcapsules a été observé par microscope à balayage électronique. On observe une perte de seulement 30% des microcapsules par rapport au contrôle. L'efficacité a été mesuré selon le protocole décrit à l'exemple 3. On observe une efficacité identique du tissu après 5 lavages par rapport au contrôle non lavé, ce qui révèle que la teneur pondérale de 0,3% d'huile de Neem peut encore être réduite tout en maintenant l'activité avec l'huile de Neem utilisée.

## Revendications

1. Procédé de traitement anti-acarien et anti-microbien d'un matériau textile, **caractérisé en ce qu'**on fixe sur ledit matériau textile des microcapsules contenant de l'huile de Neem, lesdites microcapsules étant constituées à partir d'un polymère choisi parmi les résines aminoplastes, de préférence un polymère du type urée-formol, à l'aide d'une composition de microcapsules d'huile de Neem comprenant une dispersion de microcapsules en mélange avec des dispersions de liants polymères, lesdits liants polymères comprenant au moins un liant polyuréthane et/ou un liant polysiloxane.

2. Procédé selon la revendication 1, **caractérisé en ce qu'**on fixe desdites microcapsules sur ledit matériau textile, de manière à obtenir une concentration pondérale de 0,1 à 3 % d'huile de Neem dans ledit matériau textile.

3. Procédé selon la revendication 1 ou 2, **caractérisé en ce que** l'huile de Neem est enrichie en molécules actives, de manière à contenir les proportions pondérales suivantes :
- 1 à 30 % de Nimbin, de préférence 1 à 25 %,
- 1 à 30 % de Salanim, de préférence 2 à 30 %,
- et 0,15 à 20 % d'Azadirachtine A, de préférence 1 à 20 %.

4. Procédé selon l'une quelconque des revendications 1 à 3, **caractérisé en ce que** l'on traite ledit matériau textile par trempage ou pulvérisation avec une dite composition de dites microcapsules d'huile de Neem.

5. Procédé selon la revendication 4, **caractérisé en ce que** l'on réalise un trempage initial dudit matériau textile avec une dite composition de microcapsules d'huile de Neem, suivi après usage dudit matériau textile ainsi traité d'une pulvérisation ou d'un nouveau trempage avec une dite composition de microcapsules d'huile de Neem, de préférence au moins tous les cinq lavages dudit matériau textile.

6. Procédé selon la revendication 5, **caractérisé en ce qu'**on traite ledit matériau textile par trempage dans une composition aqueuse de microcapsules d'huile de Neem, contenant les concentrations pondérales suivantes :
- au moins 0,5% de préférence au moins 3 % de dites microcapsules d'huile de Neem,
- au moins 1,5% de préférence au moins 10 % de liants polyuréthane,
- au moins 0,3% de préférence au moins 2 % de liants polysiloxane.

7. Composition de microcapsules d'huile de Neem, utile pour un procédé de traitement anti-acarien et anti-microbien de matériaux textiles, **caractérisée en ce qu'**elle contient une quantité efficace de microcapsules d'huile de Neem, telles que définies dans l'une des revendications 2 à 4, et en mélange avec des liants polymères tels que définis dans l'une des revendications 1 à 6.

8. Matériau textile bioactif obtenu par le procédé selon l'une des revendications 1 à 6.

9. Matériau textile bioactif selon la revendication 8, **caractérisé en ce qu'**il comporte des microcapsules d'huile de Neem, avec une teneur pondérale d'huile de Neem d'au moins 0,3 %, et lesdites microcapsules étant réalisées dans un polymère aminoplaste, de préférence de type urée-formol, et lesdites microcapsules étant revêtues d'une pellicule de liants polymères comprenant au moins du polyuréthane et du polysiloxane.

## Claims

1. A method of agaricidal and microbicidal treatment of a textile material, **characterized in that** microcapsules containing Neem oil are fixed on said textile material, said microcapsules being constituted by a polymer selected from aminoplast resins, preferably a urea-formol type polymer, using a Neem oil microcapsule composition comprising a dispersion of microcapsules mixed with dispersions of polymeric binders, said polymeric binders comprising at least one polyurethane binder and/or polysiloxane binder.

2. A method according to claim 1, **characterized in that** said microcapsules are fixed onto said textile material such that a concentration of 0.1% to 3% by weight of Neem oil is obtained in said textile material.

3. A method according to claim 1 or claim 2, **characterized in that** the Neem oil is enriched in active molecules such that it contains the following proportions by weight:
- 1% to 30% of nimbin, preferably 1% to 25%;
- 1% to 30% of salanim, preferably 2% to 30%; and
- 0.15% to 20% of azadirachtin A, preferably 1% to 20%.

4. A method according to any one of claims 1 to 3, **characterized in that** said textile material is treated by soaking or spraying with a composition of said Neem oil microcapsules.

5. A method according to claim 4, **characterized in that** an initial soaking of said textile material is carried out with said Neem oil microcapsule composition followed, after using said treated textile material, by spraying or soaking again with a said Neem oil microcapsule composition, preferably at least every five washes of said textile material.

6. A method according to claim 5, **characterized in that** said textile material is treated by soaking in an aqueous composition of Neem oil microcapsules containing the following concentrations by weight:
- at least 0.5%, preferably at least 3%, of said Neem oil microcapsules;
- at least 1.5%, preferably at least 10%, of polyurethane binders; and
- at least 0.3%, preferably at least 2%, of polysiloxane binders.

7. A composition of Neem oil microcapsules for use in a method of agaricidal and microbicidal treatment of textile materials, the composition being **characterized in that** it contains an effective quantity of Neem oil microcapsules, as defined in any one of claims 2 to 4, and mixed with polymeric binders as defined in any one of claims 1 to 6.

8. A bioactive textile material obtained by the method according to any one of claims 1 to 6.

9. A bioactive textile material according to claim 8, **characterized in that** it comprises Neem oil microcapsules, with a Neem oil content of at least 0.3%, said microcapsules being produced in an aminoplast polymer, preferably of the urea-formol type, and said microcapsules being coated with a film of polymeric binders comprising at least polyurethane and polysiloxane.

## Patentansprüche

1. Verfahren zur Antimilben- und Antimikroben-Behandlung eines textilen Materials, **dadurch gekennzeichnet, daß** auf dem textilen Material niemölhaltige Mikrokapseln, wobei die Mikrokapseln aus einem aus Aminoplastharzen ausgewählten Polymer, vorzugsweise aus einem Polymer vom Typ Harnstoff-Formaldehyd gebildet sind, mit Hilfe einer Zusammensetzung aus niemölhaltigen Mikrokapseln, die eine Dispersion von Mikrokapseln in Mischung mit Dispersionen von polymeren Bindemitteln umfaßt, fixiert werden, wobei die polymeren Bindemittel wenigstens ein Polyurethan-Bindemittel und/oder ein Polysiloxan-Bindemittel umfassen.

2. Verfahren nach Anspruch 1, **dadurch gekennzeichnet, daß** Mikrokapseln auf dem textilen Material derart fixiert werden, daß eine Gewichtskonzentration zwischen 0,1 und 3 % Niemöl in dem textilen Material erreicht wird.

3. Verfahren nach Anspruch 1 oder 2, **dadurch gekennzeichnet, daß** das Niemöl mit aktiven Molekülen derart angereichert ist, daß es die folgenden Gewichtsanteile enthält:
- 1 bis 30 %, vorzugsweise 1 bis 25 % Nimbin,
- 1 bis 30 %, vorzugsweise 2 bis 30 % Salanim und
- 0,15 bis 20 %, vorzugsweise 1 bis 20 % Azadirachtin.

4. Verfahren nach einem der Ansprüche 1 bis 3, **dadurch gekennzeichnet, daß** das textile Material durch Tränken oder Besprühen mit einer Zusammensetzung aus Niemölmikrokapseln behandelt wird.

5. Verfahren nach Anspruch 4, **dadurch gekennzeichnet, daß** ein Anfangstränken des textilen Materials mit einer Zusammensetzung aus Niemölmikrokapseln durchgeführt wird, an das sich nach der Benutzung des so behandelten textilen Materials ein Besprühen oder ein erneutes Tränken mit einer Zusammensetzung aus Niemölmikrokapseln anschließt, vorzugsweise wenigstens bei jedem fünften Waschgang des textilen Materials.

6. Verfahren nach Anspruch 5, **dadurch gekennzeichnet, daß** das textile Material durch Eintauchen in eine wäßrige Zusammensetzung aus Niemölmikrokapseln behandelt wird, welche die folgenden Gewichtskonzentrationen aufweist:
- wenigstens 0,5 %, vorzugsweise wenigstens 3 % Niemölmikrokapseln,
- wenigstens 1,5 %, vorzugsweise wenigstens 10 % Polyurethan-Bindemittel,
- wenigstens 0,3 %, vorzugsweise wenigstens 2 % Polysiloxan-Bindemittel.

7. Zusammensetzung aus Niemölmikrokapseln, die für ein Verfahren zur Antimilben- und Antimikroben-Behandlung von textilen Materialien von Nutzen ist, **dadurch gekennzeichnet, daß** sie eine wirkungsvolle Menge an Niemölmikrokapseln, wie sie in einem der Ansprüche 2 bis 4 definiert sind, in Mischung mit polymeren Bindemitteln, wie sie in einem der Ansprüche 1 bis 6 definiert sind, enthält.

8. Bioaktives textiles Material, das durch das Verfahren nach einem der Ansprüche 1 bis 6 erhalten wird.

9. Bioaktives textiles Material nach Anspruch 8, **dadurch gekennzeichnet, daß** es Niemölmikrokapseln mit einem Gewichtsgehalt an Niemöl von wenigstens 0,3 % enthält, wobei die Mikrokapseln aus einem Aminoplastpolymer, vorzugsweise vom Typ Harnstoff-Formaldehyd gebildet sind und wobei die Mikrokapseln mit einem Film aus polymeren Bindemitteln, die wenigstens Polyurethan und Polysiloxan umfassen, überzogen sind.
